# EUROPÄISCHE PATENTSCHRIFT

(11) **EP 3 470 249 B1**
(45) Veröffentlichungstag und Bekanntmachung des Hinweises auf die Patenterteilung: **04.03.2020**
(21) Anmeldenummer: 18199161.3
(22) Anmeldetag: 08.10.2018
(51) Int. Cl.: B60H 1/00, B60H 1/24, B60H 1/26, B60R 5/04

(54) **BAUTEILSYSTEM ZUR BELÜFTUNG EINES KOFFERRAUMBEREICHS UND KRAFTFAHRZEUG**
COMPONENT SYSTEM FOR VENTILATING A LUGGAGE AREA AND MOTOR VEHICLE
SYSTÈME DE COMPOSANTS PERMETTANT D'AÉRER UNE ZONE DE COFFRE À BAGAGES ET VÉHICULE AUTOMOBILE

(30) Priorität: 11.10.2017 DE 102017123698
(43) Veröffentlichungstag der Anmeldung: 17.04.2019
(73) Patentinhaber: VOLKSWAGEN AKTIENGESELLSCHAFT, 38440 Wolfsburg (DE); Dr. Ing. h.c. F. Porsche AG, 70435 Stuttgart (DE)
(72) Erfinder: Rösemann, Harald, 38518 Gifhorn (DE); Paschke, Jennifer, 38173 Sickte (DE); Leip, Dennis, 71106 Magstadt (DE); Podda, Adriano, 71665 Vaihingen/Enz (DE); Wendl, Christian, 71254 Ditzingen (DE)
(74) Vertreter: Schulz Junghans Patentanwälte PartGmbB

(56) Entgegenhaltungen:
- DE-A1-102009 055 835
- DE-U1-202008 002 920
- JP-A- 2005 075 082
- JP-U- H0 260 006
- US-A1- 2009 008 060

## Beschreibung

Die Erfindung betrifft ein Bauteilsystem zur Belüftung eines Kofferraumbereichs eines Kraftfahrzeugs zwecks Kühlung wenigstens einer in dem Kofferraumbereich befindlichen Einheit sowie ein Kraftfahrzeug, insbesondere einen Personenkraftwagen.

In Kraftfahrzeugen werden vermehrt elektrische bzw. elektronische Einheiten angeordnet, die während der Nutzung Abwärme produzieren und die deshalb zur Gewährleistung eines dauerhaften störungsfreien Betriebs zu kühlen sind. Insbesondere im Bereich der Hybrid- und Elektrofahrzeuge sind zur Speicherung elektrischer Energie Superkondensatoren und/oder Sekundärbatterien vorhanden, die es zu kühlen gilt.

Zu kühlende elektrische bzw. elektronische Einheiten können beispielsweise in einem unterhalb des Ladebodens des Kofferraums befindlichen Kofferraumbereich angeordnet sein. Eine bekannte Lösung zur Kühlung dort befindlicher Einheiten ist die Nutzung der im Kofferraum vorhandenen Luft. In Abhängigkeit der zur Kühlung der Einheiten erforderlichen Kühlleistung ist die vorhandene Luftmenge des Kofferraums allerdings nicht immer ausreichend.

Zur Belüftung der zu kühlenden Einheiten kann Innenraumluft des Kraftfahrzeugs genutzt werden. Kraftfahrzeuge weisen typischerweise eine Zwangsentlüftung auf, die eine vom Nutzer nicht zu beeinflussende Verbindung des Fahrzeuginnenraums mit der Umgebung darstellt. Mittels dieser werden beispielsweise ungewünschte Luftdruckspitzen beim Schließen von Türen verhindert sowie eine Entlüftung des Fahrzeuginnenraums gewährleistet. Die im Folgenden beschriebenen Konzepte basieren auf der Nutzung von Luft aus dem Fahrzeuginnenraum, welche über die Zwangsentlüftung nach außen geführt wird.

Die DE 20 2007 006 995 U1 beschreibt eine Anordnung von Elektronikkomponenten in einem Fahrzeug, die eine Aufnahmevorrichtung für die Elektronikkomponenten in einem im Kofferraum des Fahrzeugs ausgebildeten seitlich angeordneten Stauraum umfasst. Der Stauraum befindet sich im Bereich der Zwangsentlüftung des Fahrzeugs und typischerweise hinter der Kofferraumverkleidung. Die Elektronikkomponente ist luftstromaufwärts im Abstand von einer Entlüftungsöffnung zur Zwangsentlüftung im Kofferraum angeordnet und kann vom Zwangsentlüftungsstrom im Fahrzeug umströmt werden. Somit fungiert der vorhandene Zwangsentlüftungsstrom zugleich als Kühlmittel für die Elektronikkomponenten.

Die DE 10 2015 003 674 A1 offenbart eine Vorrichtung zur Entlüftung eines Fahrzeuginnenraums, bei der der Ladeboden eines Kofferraums mit mehreren, über die Ladebodenfläche verteilt angeordneten, Entlüftungsöffnungen versehen ist. Die Luft strömt durch diese in einen unter dem Ladeboden angeordneten Luftraum und anschließend über Auslässe im Heckabschlussblech nach außen. Der Luftraum kann beispielsweise eine muldenartige Vertiefung sein, wie sie beispielsweise zur Anordnung eines Ersatzrades bekannt ist. Die Entlüftungsöffnungen können durch eine Vielzahl von Löchern ausgebildet sein und/oder mit Abdeckungen versehen sein.

US 2009/008060 A1 offenbart ein Bauteilsystem zur Belüftung eines Kofferraumbereichs zwecks Kühlung einer in dem Kofferraumbereich befindlichen Einheit. Es ist die Aufgabe der Erfindung, ein Bauteilsystem zur Belüftung eines Kofferraumbereichs und ein Kraftfahrzeug mit einem derartigen Bauteilsystem zur Verfügung zu stellen, mit welchen auf einfache, effektive und kostengünstige Weise die Kühlung wenigstens einer im Kofferraumbereich befindlichen Einheit möglich ist.

Die Aufgabe wird gelöst durch das Bauteilsystem zur Belüftung eines Kofferraumbereichs gemäß Anspruch 1 sowie durch das Kraftfahrzeug gemäß Anspruch 9. Ausgestaltungen des Bauteilsystems sind in den Unteransprüchen 2-8 angegeben, eine Ausgestaltung des Kraftfahrzeugs ist in Unteranspruch 10 angegeben.

Ein erster Aspekt der Erfindung ist ein Bauteilsystem zur Belüftung eines Kofferraumbereichs eines Kraftfahrzeugs zwecks Kühlung wenigstens einer in dem Kofferraumbereich befindlichen Einheit. Dieses umfasst einen Ladeboden zur Ablage von Gegenständen, den unter dem Ladeboden angeordneten Kofferraumbereich, sowie ein den Kofferraumbereich bereichsweise begrenzendes erstes Bauteil, insbesondere ein Rohbauteil. Zwischen Ladeboden und erstem Bauteil ist wenigstens ein Durchlass zur Durchleitung eines Luftstroms in den Kofferraumbereich angeordnet.

Im Kofferraumbereich ist die wenigstens eine zu kühlende Einheit angeordnet. Insbesondere kann diese elektrische bzw. elektronische Komponenten umfassen, wie etwa Kondensatoren bzw. Superkondensatoren, auch als Supercaps bezeichnet, Sekundär-Batterien, Leistungselektronik, Steuerungs- und/oder Signalverarbeitungseinrichtungen, usw. Derartige Einheiten zeichnen sich häufig durch Wärmeentwicklung während des Betriebs bzw. der Nutzung aus, wobei diese Abwärme zur Gewährleistung eines stabilen und störungsfreien Betriebs abzuführen ist.

Der Kofferraumbereich im Sinne der Erfindung ist bei bestimmungsgemäßem Gebrauch eines das Bauteilsystem aufweisenden Kraftfahrzeugs unterhalb des durch den Nutzer als Stauraum nutzbaren Kofferraums angeordnet. Typischerweise ist er von diesem separiert, insbesondere mittels des Ladebodens. Der Ladeboden ist somit der Boden des vom Nutzer nutzbaren Kofferraums. Auf diesem können Gegenstände abgelegt werden, etwa zum Transport in dem das Bauteilsystem aufweisenden Kraftfahrzeug. Der Ladeboden kann fest eingebaut bzw. einbaubar sein. Alternativ kann er als herausnehmbarer Einlegeboden ausgestaltet sein. Der Ladeboden kann aus mehreren Komponenten bzw. Schichten zusammengesetzt sein bzw. diese umfassen. Insbesondere begrenzt der Ladeboden den Kofferraumbereich bereichsweise.

Das erste Bauteil begrenzt den Kofferraumbereich insbesondere in Richtung auf die Fahrzeugfront eines das Bauteilsystem aufweisenden Kraftfahrzeugs. Es bildet also eine vordere Begrenzung des Kofferraumbereichs aus. Es ist typischerweise länglich ausgebildet und quer zur Fahrtrichtung des Kraftfahrzeugs angeordnet. Begrenzen im Sinne der Erfindung meint, dass eine Form eines Bereichs des jeweiligen Raums, etwa des Kofferraumbereichs, zumindest im Wesentlichen durch das jeweilige Bauteil, etwa das erste Bauteil, definiert ist. Dabei können selbstverständlich weitere Bauteile wie Verkleidungen, Abdeckungen oder ähnliches im Kofferraumbereich angeordnet sein und das erste Bauteil in Richtung auf den Kofferraumbereich verkleiden.

Das erste Bauteil kann ein Rohbauteil sein, also ein Teil der Fahrzeugkarosserie, wie beispielsweise ein Querträger bzw. ein Teil eines Querträgers. Es kann ein Blechbauteil sein.

Der Durchlass bildet eine strömungstechnische Verbindung zwischen dem Kofferraumbereich und dem Innenraum des Kraftfahrzeugs. Er ist derart ausgestaltet, dass Luft aus dem Fahrzeuginnenraum durch ihn hindurch in den Kofferraumbereich strömen kann. Der Durchlass kann als Loch oder Spalt ausgeführt sein. Fahrzeuginnenraum meint dabei insbesondere den durch die innenliegenden Oberflächen des Kraftfahrzeugs begrenzten freien Raum im Kraftfahrzeug. Typischerweise ist eine Vielzahl von Durchlässen angeordnet. Insbesondere sind mehrere über die Längserstreckung des ersten Bauteils verteilt angeordnete Durchlässe angeordnet.

Der Durchlass ist insbesondere derart zu dimensionieren, dass zumindest die zur Kühlung der angeordneten wenigstens einen zu kühlenden Einheit notwendige Luftmenge unter den Betriebsbedingungen bereitgestellt werden kann. Dabei sind die Temperaturen der zu kühlenden Einheit und der Luft im Fahrzeuginnenraum sowie die Strömungsbedingungen der Luft zu berücksichtigen.

Der Durchlass befindet sich zumindest bereichsweise zwischen Ladeboden und erstem Bauteil. Mit anderen Worten ist seine Position als zwischen Ladeboden und erstem Bauteil befindlich definiert. Der Durchlass muss dabei nicht notwendigerweise durch eines oder beide der genannten Teile begrenzt oder ausgebildet sein. Er kann beispielsweise als Spalt zwischen Ladeboden und erstem Bauteil oder als Aussparung bzw. Öffnung im Ladeboden oder im ersten Bauteil realisiert sein.

Mit anderen Worten sind der Ladeboden und das erste Bauteil derart ausgestaltet und/oder relativ zueinander positioniert, dass sich zwischen ihnen wenigstens ein Durchlass zur Durchleitung eines Luftstroms befindet. Der Ladeboden und/oder das erste Bauteil können im Bereich des Durchlasses selbstverständlich teilweise oder vollständig verkleidet sein.

Die Durchleitung des Luftstroms erfolgt durch den Durchlass und in den Kofferraumbereich hinein. Insbesondere weist der Kofferraumbereich wenigstens eine weitere Öffnung zur Ableitung des Luftstroms auf. Diese kann an einer dem Durchlass benachbarten und/oder an einer diesem gegenüberliegenden Seite des Kofferraumbereichs angeordnet sein. Als eine derartige weitere Öffnung kann beispielsweise ein vorhandenes Entlüftungselement für die Zwangsentlüftung genutzt werden, welches in strömungstechnischer Verbindung mit dem Kofferraumbereich steht.

Mit dem erfindungsgemäßen Bauteilsystem kann auf einfache, effektive und kostengünstige Weise die Kühlung wenigstens einer im Kofferraumbereich befindlichen Einheit realisiert werden. Weiterhin ist insbesondere im Sommer die Nutzung der gekühlten Luft aus dem Fahrzeuginnenraum zur Kühlung der Einheit vorteilhaft, da damit im Vergleich zur wärmeren Außenluft größere Wärmemengen aufgenommen werden können.

In einer Ausgestaltung des Bauteilsystems dient das erste Bauteil zur mechanischen Abstützung des Ladebodens.

Die Abstützung meint die zumindest anteilige Aufnahme von Kräften, insbesondere von Gewichtskräften, bei bestimmungsgemäßem Gebrauch entgegen der Schwerkraftrichtung.

Das bedeutet, dass in zumindest einem Punkt bzw. einer Fläche ein direkter oder indirekter Kontakt zwischen dem ersten Bauteil und dem Ladeboden besteht, so dass es in zumindest diesem Punkt bzw. dieser Fläche zu einer mechanischen Abstützung des Ladebodens durch das erste Bauteil kommt. Dabei kann der Durchlass mit Blickrichtung von oben neben dieser Fläche angeordnet sein. Typischerweise sind mehrere zur Abstützung des Ladebodens eingerichtete Flächen angeordnet, zwischen denen sich jeweils Durchlässe zur Durchleitung jeweiliger Luftströme befinden.

Insbesondere ist das erste Bauteil in dieser Ausführungsform ein Rohbauteil, sodass die Gewichtskraft des Ladebodens und/oder etwaig darauf angeordneter Gegenstände zumindest anteilig auf die Fahrzeugkarosserie übertragen werden kann. Das erste Bauteil kann ein Rohbau-Querträger sein, der der Bereitstellung der notwendigen Steifigkeit der Karosserie dient.

Diese Ausgestaltung bringt den Vorteil mit sich, dass das zur Abstützung des Ladebodens notwendige erste Bauteil zugleich zur Realisierung des Durchlasses für den Luftstrom genutzt wird. Somit sind keine zusätzlichen Bauteile bzw. keine baulichen Veränderungen der vorhandenen Bauteile notwendig.

In einer weiteren Ausgestaltung umfasst das Bauteilsystem weiterhin ein Abdeckelement zur Abdeckung des ersten Bauteils. Dieses ist derart angeordnet und/oder ausgestaltet, dass zwischen dem ersten Bauteil und dem Abdeckelement ein mit dem Kofferraumbereich strömungstechnisch verbundener Hohlraum ausgebildet ist. Die strömungstechnische Verbindung zwischen dem Kofferraumbereich und dem Hohlraum bildet der Durchlass.

Der Hohlraum ist typischerweise luftstromaufwärts des Kofferraumbereichs befindlich. So kann der zu realisierende Luftstrom vom Fahrzeuginnenraum in den Hohlraum und von diesem in den Kofferraumbereich geleitet werden. Der Hohlraum kann ebenso wie der Kofferraumbereich zur Anordnung wenigstens einer zu kühlenden Einheit nutzbar sein. Insbesondere ist der Hohlraum entlang der Fahrtrichtung des Kraftfahrzeugs vor dem ersten Bauteil angeordnet. Er kann bereichsweise von diesem begrenzt sein. Das Abdeckelement kann den Hohlraum nach vorn und/oder oben gegenüber dem Fahrzeuginnenraum abgrenzen.

Das Abdeckelement kann zur Abdeckung des ersten Bauteils in Richtung auf den Fahrzeuginnenraum des das Bauteilsystem aufweisenden Kraftfahrzeugs dienen. Es kann also als Sichtblende für das erste Bauteil und zur Unterbringung von elektrischen bzw. elektronischen Einheiten dienen. Typischerweise ist es als Kunststoffteil ausgeführt.

Diese Ausgestaltung weist den Vorteil auf, dass mit dem Abdeckelement eine optisch ansprechende Sichtblende für das erste Bauteil zur Verfügung gestellt wird, die gleichermaßen als Funktionselement zur Realisierung des Luftstroms genutzt wird. Des Weiteren wird mit dem Hohlraum ein zusätzlicher nutzbarer Raum bereitgestellt. Durch den verlängerten Strömungspfad des Luftstroms wird eine deutliche Verringerung bzw. Dämmung des vom Kofferraumbereich ausgehenden Schalls erzielt.

In einer weiteren Ausgestaltung weist das Abdeckelement wenigstens eine erste Aussparung zur Durchleitung des Luftstroms in den Hohlraum bzw. Kofferraumbereich auf. Alternativ oder zusätzlich ist zwischen Abdeckelement und Ladeboden ein Spalt zur Durchleitung des Luftstroms angeordnet.

Die erste Aussparung kann ein beliebig geformtes Durchgangsloch oder eine an einem Rand des Abdeckelements angeordnete Aussparung sein. Es können mehrere erste Aussparungen angeordnet sein, die einander gleichen und/oder unterschiedlich ausgebildet sein können.

Beispielsweise kann die erste Aussparung als Durchgangsloch im unteren Bereich des Abdeckelements realisiert sein. Auch können über die Breite des Abdeckelements, also über dessen quer zur Fahrtrichtung des Kraftfahrzeugs verlaufende Ausdehnungsrichtung, mehrere erste Aussparungen verteilt sein.

Es können auch in den seitlichen Bereichen des Abdeckelements, also nahe seiner im Kraftfahrzeug rechts und links gelegenen seitlichen Begrenzungen, erste Aussparungen angeordnet sein.

Diese Ausführungsform weist den Vorteil auf, dass die Strömungspfade des Luftstroms für die Belüftung des Hohlraums bzw. des Kofferraumbereichs länger sind und somit eine größere akustische Abschirmung bereitstellen. Des Weiteren sind die genannten Strömungspfade in Abhängigkeit der jeweiligen Anforderungen auf sehr variable Weise realisierbar, da eine Vielzahl von Möglichkeiten zur Anordnung und Ausgestaltung der Aussparungen existiert.

Alternativ oder zusätzlich ist weiterhin eine Belüftung des Hohlraums durch Belüftungsöffnungen im Ladeboden möglich. In diesem Fall kann die Luft durch diese in den Hohlraum und von dort in bekannter Weise durch den Durchlass in den Kofferraumbereich strömen.

Die strömungstechnische Verbindung zwischen dem Hohlraum und dem Kofferraumbereich kann eine von dem Abdeckelement und/oder einer Verkleidung des ersten Bauteils ausgebildete zweite Aussparung umfassen.

In dieser Ausführungsform bildet bzw. weist das Abdeckelement und/oder eine Verkleidung des ersten Bauteils eine zweite Aussparung auf, die ein beliebig geformtes Durchgangsloch bzw. eine an einem Rand des Abdeckelements bzw. der Verkleidung angeordnete Aussparung sein kann. Es können mehrere zweite Aussparungen angeordnet, die einander gleichen und/oder unterschiedlich ausgebildet sein können. Die zweite Aussparung bildet einen Teil der strömungstechnischen Verbindung zwischen Hohlraum und Kofferraumbereich, ist also typischerweise nahe des Durchlasses angeordnet. Sie kann Teil des Durchlasses sein. Die Verkleidung des ersten Bauteils verkleidet dieses insbesondere in Bezug zum Hohlraum, zum Durchlass und/oder zum Kofferraumbereich.

Das Abdeckelement kann beispielsweise entgegen der Fahrtrichtung des das Bauteilsystem aufweisenden Kraftfahrzeugs weiter nach hinten in Richtung auf den Kofferraumbereich erstreckt sein. Es kann in die Verkleidung des ersten Bauteils übergehen bzw. gemeinsam mit dieser ausgebildet sein. Mit anderen Worten kann der Hohlraum zumindest bereichsweise durch ein Bauteil begrenzt sein, welches als Verkleidung des ersten Bauteils gegenüber dem Hohlraum einerseits sowie als Abdeckelement andererseits fungiert, und in welchem wenigstens eine zweite Aussparung zur Durchleitung des Luftstroms in Strömungsrichtung auf den Kofferraumbereich angeordnet ist. Auch die Ausführung des Abdeckelements und der Verkleidung als separate Teile ist möglich, wobei die zweite Aussparung zwischen den beiden Bauteilen angeordnet sein kann. Das Abdeckelement und/oder die Verkleidung kann sich bis in den Bereich zwischen erstem Bauteil und Ladeboden erstrecken. In einer Ausführungsform ist der Hohlraum im Wesentlichen vollständig von einem Bauteil begrenzt, etwa einem Kunststoffteil, welches in seinem vorderen bzw. oberen Bereich als Abdeckelement zur Abdeckung des ersten Bauteils in Richtung auf den Fahrzeuginnenraum dient und somit den Hohlraum in Richtung auf den Fahrzeuginnenraum begrenzt und welches in seinem hinteren bzw. unteren Bereich eine Auskleidung des Hohlraums bildet und das erste Bauteil in Richtung auf den Hohlraum verkleidet. Alle Richtung- und Positionsangaben beziehen sich auf die bestimmungsgemäße Verwendung eines das Bauteilsystem aufweisenden Kraftfahrzeugs.

Zusätzlich oder alternativ kann der Kofferraumbereich selbst teilweise oder vollständig mit einem Bodenbelag ausgekleidet sein. Dieser Bodenbelag kann als Absorbervlies zur Schalldämmung realisiert sein. Er kann derart ausgestaltet sein, dass er das erste Bauteil in Richtung auf den Kofferraumbereich verkleidet. Analog zum Abdeckelement kann auch der Bodenbelag einen Teil der strömungstechnischen Verbindung zwischen dem Hohlraum und im Kofferraumbereich ausbilden. Zu diesem Zweck kann er ebenfalls eine oder mehrere Aussparungen aufweisen, auch als Freimachung bezeichnet. In einer Ausgestaltung können der Bodenbelag des Kofferraumbereichs sowie die Verkleidung des Hohlraums miteinander verbunden sein bzw. ineinander übergehen, um das erste Bauteil vollständig zu verkleiden.

Die beschriebene Ausführungsform weist den Vorteil auf, dass die strömungstechnische Verbindung zwischen dem Hohlraum und dem Kofferraumbereich auf besonders einfache Weise und unter Nutzung weniger Bauteile realisiert werden kann. Die Rohbauteile können derart verkleidet werden, dass sie für den Nutzer nicht sichtbar sind.

In einer weiteren Ausgestaltung weist das Bauteilsystem wenigstens ein den Kofferraumbereich bereichsweise begrenzendes zweites Bauteil auf, wobei das zweite Bauteil zumindest eine dritte Aussparung, insbesondere eine Öffnung, zur Ableitung des Luftstroms aus dem Kofferraumbereich aufweist.

Das zweite Bauteil ist insbesondere ein Rohbauteil, wie etwa ein Längsträger oder der hintere Schlossträger, und/oder dient zum seitlichen Abstützen des Ladebodens. Es kann eine seitliche und/oder hintere Begrenzung des Kofferraumbereichs sein. Es können mehrere zweite Bauteile angeordnet sein, die beispielsweise den Kofferraumbereich in unterschiedlichen Richtungen begrenzen. Typischerweise sind zwei zweite Bauteile auf einander gegenüberliegenden Seiten des Kofferraumbereichs angeordnet und begrenzen diesen beidseitig. Insbesondere hat jedes der zweiten Bauteile wenigstens eine dritte Aussparung.

In dieser Ausgestaltung kann der Luftstrom durch den Durchlass von vorn in den Kofferraumbereich geleitet werden und seitlich, insbesondere beidseitig, aus dem Kofferraumbereich hinausgeleitet werden. Nach der Ableitung aus dem Kofferraumbereich durch die dritte Aussparung kann der Luftstrom außerhalb des Kofferraumbereichs hin zu einem Entlüftungselement für die Zwangsentlüftung geführt werden.

Die dritte Aussparung kann ein beliebig geformtes Durchgangsloch oder wenigstens eine an einem Rand des dritten Bauteils angeordnete Aussparung sein. Wie jede Aussparung kann sie eine Abdeckung bzw. ein Gitter aufweisen, um den Durchtritt von Gegenständen zu verhindern. Die dritte Aussparung bildet die strömungstechnische Verbindung zwischen dem Kofferraumbereich und einem hinter dem zweiten Bauteil befindlichen Bereich, der etwa ein Strömungskanal zur Ableitung der Luft sein kann.

Diese Ausgestaltung weist den Vorteil auf, dass auf einfache und kostengünstige Weise die Ableitung der zur Kühlung genutzten Luft realisiert werden kann. Weiterhin kann der Luftstrom durch geeignete Anordnung und Ausgestaltung der Durchlässe derart realisiert werden, dass eine besonders effiziente Wärmeübertragung möglich wird, beispielsweise durch geeignete Turbulenz.

In einer weiteren Ausgestaltung weist das Bauteilsystem wenigstens ein mit dem Kofferraumbereich strömungstechnisch verbundenes Entlüftungselement zur Realisierung des Luftstroms durch den Kofferraumbereich auf. Dieses kann insbesondere ein Zwangsentlüfter sein.

Das Entlüftungselement kann zur Ableitung des Luftstroms in die Umgebung des Kraftfahrzeugs dienen. Es kann zur Erzeugung eines Unterdrucks zum Ansaugen der Luft aus dem Fahrzeuginnenraum bzw. dem Hohlraum durch den Durchlass in den Kofferraumbereich eingerichtet sein und auf diese Weise zur Realisierung des Luftstroms geeignet sein.

Das Entlüftungselement kann ein Zwangsentlüfter sein, also eine den Fahrzeuginnenraum mit der Fahrzeugumgebung verbindende Öffnung sein, die zur Zwangsentlüftung genutzt wird. Diese kann beispielsweise derart ausgestaltet sein, dass sie infolge der während der Fahrt des Kraftfahrzeugs auftretenden Luftströmung um das Kraftfahrzeug herum einen Unterdruck realisiert, der zur Entlüftung des Fahrzeuginnenraums geeignet ist.

Das Entlüftungselement befindet sich luftstromabwärts vom Kofferraumbereich. Es kann bei Vorhandensein eines zweiten Bauteils mit dem hinter dem zweiten Bauteil befindlichen Bereich strömungstechnisch verbunden sein, so dass die Luft vom Kofferraumbereich durch die dritte Aussparung in den hinter dem zweiten Bauteil befindlichen Bereich geleitet werden kann, darin, insbesondere entgegen der Fahrtrichtung, nach hinten geführt werden kann und durch das Entlüftungselement in die Umgebung des Kraftfahrzeugs abgeleitet werden kann. Insbesondere können beidseitig Entlüftungselemente angeordnet sein.

Das Entlüftungselement kann zur Ableitung des Luftstroms aus dem Kofferraumbereich eingerichtet sein.

Diese Ausgestaltung bringt den Vorteil mit sich, dass der Luftstrom unter Nutzung der vorhandenen Entlüftungselemente für die Zwangsentlüftung realisiert bzw. erzeugt werden kann. Somit wird eine einfache und stabile Lösung ohne zusätzliche Teile zur Verfügung gestellt.

Die erste Aussparung des Abdeckelements und der Durchlass können derart angeordnet sein, dass sie ein akustisches Labyrinth ausbilden.

Ein akustisches Labyrinth meint eine Einrichtung zur Verhinderung einer geradlinigen Schallausbreitung bzw. zur Verringerung der akustischen Durchstrahlung. Dafür genutzte Mittel sind beispielsweise aufeinanderfolgende Umlenkungen und Querschnittsänderungen eines Querschnitts, in welchem Schall übertragen wird. Das akustische Labyrinth dient in Zusammenhang mit der Erfindung insbesondere der Verringerung des Anteils des im Kofferraumbereich befindlichen Schalls, der in den Fahrzeuginnenraum übertragen wird, und somit der Verringerung der Fahrgeräusche im Fahrzeuginnenraum. Der im Kofferraumbereich befindliche Schall wird in diesen insbesondere aus der äußeren Fahrzeugumgebung über den Rohbau und über Öffnungen, etwa durch Öffnungen für die Zwangsentlüftung, eingetragen.

Zur Durchleitung des Luftstroms vom Fahrzeuginnenraum in den Hohlraum ist die erste Aussparung des Abdeckelements vorgesehen und zur Durchleitung des Luftstroms vom Hohlraum in den Kofferraumbereich ist der Durchlass vorgesehen. Um zu verhindern, dass Schall vom Kofferraumbereich geradlinig und somit weitgehend unvermindert in den Fahrzeuginnenraum gelangt, sind die erste Aussparung und der Durchlass in dieser Ausgestaltung derart angeordnet, dass der Schall, ausgehend von seinem Eintrittspunkt in den Kofferraumbereich, wenigstens einmal und insbesondere wenigstens zweimal die Richtung ändern muss, bevor er den Fahrzeuginnenraum erreicht. Damit wird trotz des Vorhandenseins einer strömungstechnischen Verbindung vom Fahrzeuginnenraum zur äußeren Umgebung des Kraftfahrzeugs eine wesentliche Abschwächung des Schalls und somit eine Geräuschminimierung im Fahrzeuginnenraum erreicht. Somit kann der Anteil des über die Zwangsentlüftung eingetragenen Schalls in den Fahrzeuginnenraum deutlich reduziert werden.

Zusätzlich können der Kofferraumbereich und/oder der Hohlraum mit schallabsorbierenden Materialien ausgekleidet sein.

Diese Ausgestaltung weist den Vorteil auf, dass trotz der vorhandenen und notwendigen Öffnung zur Entlüftung nach außen der eintretende Schall weitestgehend reduziert wird und somit die Geräusche im Fahrzeuginnenraum minimal gehalten werden können. Auch große Luftmengen können somit ohne störende Fahrgeräusche im Kofferraumbereich bereitgestellt werden.

Ein zweiter Aspekt der Erfindung ist ein Kraftfahrzeug, insbesondere ein Personenkraftwagen. Dieses weist wenigstens ein erfindungsgemäßes Bauteilsystem zur Belüftung eines Kofferraumbereichs auf.

Insbesondere ist der Durchlass zur Durchleitung eines im Wesentlichen entgegen der Fahrtrichtung des Kraftfahrzeugs gerichteten Luftstroms angeordnet, sodass Luft aus dem vorderen Teil des Fahrzeuginnenraums zur Kühlung der im Kofferraumbereich angeordneten Einheit genutzt werden kann.

In einer Ausgestaltung des Kraftfahrzeugs weist dieses weiterhin wenigstens eine zu kühlende Einheit auf, insbesondere umfassend wenigstens einen Superkondensator. Diese ist derart im Kofferraumbereich angeordnet, dass sie mittels eines in den Kofferraumbereich eingeleiteten Luftstroms kühlbar ist.

Eine zu kühlende Einheit ist ein Gegenstand, der gekühlt werden soll. Insbesondere ist es ein Gegenstand, der sich während seiner Nutzung erwärmt. Die dabei entstehende überschüssige Wärme wird abgeführt, um die Funktionalität der Einheit dauerhaft zu gewährleisten. Insbesondere sind, wie beschrieben, elektrische bzw. elektronische Einheiten gemeint, etwa Kondensatoren bzw. Superkondensatoren, auch als Supercaps bezeichnet, Sekundär-Batterien, Leistungselektronik, Steuerungs- und/oder Signalverarbeitungseinrichtungen, usw.

Insbesondere wird der Luftstrom durch den Durchlass in den Kofferraumbereich eingeleitet. Typischerweise wird der Luftstrom an einer anderen Position, insbesondere mittels einer dritten Aussparung eines zweiten Bauteils, aus dem Kofferraum abgeleitet, sodass ein durchgehender Luftstrom zur Kühlung realisiert werden kann. Die Einheit ist insbesondere derart im Kofferraumbereich angeordnet, dass sie sich zwecks Realisierung einer effizienten Wärmeübertragung im zu erzeugenden Luftstrom befindet. Insbesondere ist der Luftstrom turbulent zu gestalten, um eine maximale Wärmeübertragung zu erzielen.

Das Kraftfahrzeug kann alternativ oder zusätzlich zur zu kühlenden Einheit im Kofferraumbereich wenigstens eine zu kühlende Einheit im Hohlraum aufweisen.

Ein weiterer Aspekt der Erfindung ist ein Verfahren zur Belüftung eines Kofferraumbereichs eines Kraftfahrzeugs zwecks Kühlung wenigstens einer in dem Kofferraumbereich befindlichen Einheit. Dabei wird durch einen Durchlass, welcher sich zwischen einem Ladeboden zur Ablage von Gegenständen und einem einen Kofferraumbereich des Kraftfahrzeugs bereichsweise begrenzenden ersten Bauteil, insbesondere einem Rohbauteil, ein Luftstrom durchgeleitet und zwecks Kühlung der darin befindlichen Einheit in den Kofferraumbereich eingeleitet.

Insbesondere ist das Verfahren zur Durchführung mit dem erfindungsgemäßen Bauteilsystem und/oder dem erfindungsgemäßen Kraftfahrzeug realisierbar. In diesem Fall umfasst es neben der Bereitstellung des Bauteilsystems bzw. des Kraftfahrzeugs die Durchleitung eines Luftstroms durch den Durchlass in den Kofferraumbereich.

Die Erfindung wird im Folgenden anhand der in den beiliegenden Zeichnungen dargestellten Ausführungsbeispiele erläutert.

Es zeigen
Fig. 1: eine perspektivische Ansicht eines Kraftfahrzeug-Kofferraums,
Fig. 2: einen Längsschnitt des erfindungsgemäßen Bauteilsystems in einer ersten Ausführungsform,
Fig. 3: eine perspektivische Ansicht des Abdeckelements aus Fig. 2,
Fig. 4: eine perspektivische seitliche Ansicht eines Kraftfahrzeug-Kofferraums mit dem erfindungsgemäßen Bauteilsystem,
Fig. 5: eine perspektivische Ansicht eines Kraftfahrzeug-Kofferraums mit einem entsprechend einer Ausgestaltung der Erfindung modifizierten Ladeboden, sowie
Fig. 6: eine Ansicht eines gemäß einer weiteren Ausgestaltung der Erfindung modifizierten Übergangs zwischen Ladeboden und Abdeckelement.

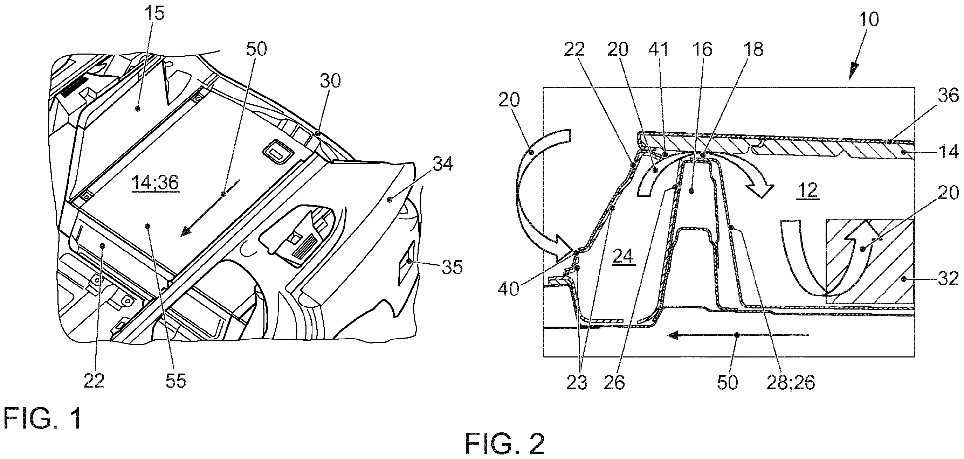

Fig. 1 zeigt einen Kraftfahrzeug-Kofferraum von schräg oben. Der vom Nutzer zur Ablage von Gegenständen nutzbare Ladeboden 14 stellt die untere Begrenzung des Kofferraums dar. Rechts und links begrenzen Seitenwände 15 den Kofferraum. Der Ladeboden 14 ist mit einer textilen Abdeckung 36 versehen. Unterhalb des Ladebodens 14 befindet sich der hier nicht dargestellte Kofferraumbereich zur Anordnung zu kühlender Einheiten. Rechts oben dargestellt ist der Schlossträger hinten 30, an welchem das Schloss zum Schließen der Heckklappe angeordnet ist. Dieser ist ein Teil der Kraftfahrzeug-Karosserie und fest mit den weiteren Rohbauteilen 34 verbunden. Im Rohbau 34 ist seitlich ein Entlüftungselement 35 angeordnet, welches als Öffnung zur Ableitung eines Luftstroms aus dem Fahrzeuginnenraum 55 in die Umgebung des Fahrzeugs ausgestaltet ist; auf der anderen Seite ist ein gleichartiges Entlüftungselement 35 vorhanden.

Der Kofferraum wird entlang der Fahrtrichtung 50 nach vorne hin vom Abdeckelement 22 begrenzt, welches auch als Schottwandabdeckung bezeichnet wird. Weiter vorn befinden sich Befestigungselemente zur Anordnung der Fahrzeugsitze und dazwischen liegende Auskleidungsteile.

In Figur 2 ist das erfindungsgemäße Bauteilsystem 10 im Längsschnitt entlang der Fahrtrichtung 50 dargestellt. Es ist ersichtlich, dass der Ladeboden 14 und das erste Bauteil 16, welches ein Rohbauteil ist, nämlich ein Rohbau-Querträger, den Kofferraumbereich 12 bereichsweise begrenzen. Im Kofferraumbereich 12 ist eine zu kühlende Einheit 32 schematisch dargestellt. Mittels des Luftstroms 20 wird zwecks Kühlung Luft an der Einheit 32 vorbei geleitet. Zwischen dem Ladeboden 14 und dem ersten Bauteil 16 ist der Durchlass 18 angeordnet, durch welchen ein Luftstrom 20 in den Kofferraumbereich 12 eingeleitet werden kann.

Der Kofferraumbereich 12 ist mit einem darin befindlichen Bodenbelag 28 ausgekleidet. Der links dargestellte Bereich des Bodenbelags 28 ist dabei eine Verkleidung 26 des ersten Bauteils 16.

Links vom ersten Bauteil 16, also luftstromaufwärts des Durchlasses 18, befindet sich ein Hohlraum 24, welcher in Richtung auf den Fahrzeuginnenraum 55 von einem Abdeckelement 22 begrenzt wird. Das Abdeckelement 22 deckt das erste Bauteil 16 derart ab, dass der Hohlraum 24 ausgebildet wird. Im unteren Bereich des Abdeckelements 22 befindet sich eine erste Aussparung 40, durch welche der Luftstrom 20 vom Fahrzeuginnenraum 55 in den Hohlraum 24 geleitet werden kann.

Auf der Seite des ersten Bauteils 16 ist der Hohlraum 24 mit einer Verkleidung 26 ausgekleidet. Es ist ersichtlich, dass das Abdeckelement 22 und die Verkleidung 26 zwischen einander eine zweite Aussparung 41 ausbilden, durch welche der Luftstrom 20 vom Hohlraum 24 über den unmittelbar hinter der zweiten Aussparung 41 angeordneten Durchlass 18 in den Kofferraumbereich 12 strömen kann. Die textile Abdeckung 36 des Ladebodens ist in dessen entlang der Fahrtrichtung 50 betrachteten vorderem Bereich U-förmig um den Ladeboden 14 herum gebogen und kontaktiert dort das Abdeckelement 22.

Das erste Bauteil 16 dient der mechanischen Abstützung des Ladebodens 14. Senkrecht zur Bildebene sind über die Breite des Kraftfahrzeugs verteilt mehrere Durchlässe 18 angeordnet, welche jeweils von Verbindungsbereichen separiert sind, in welchen eine mechanische Verbindung zwischen erstem Bauteil 16 und Ladeboden 14 besteht.

Weiterhin ist ersichtlich, dass die erste Aussparung 40 des Abdeckelements 22 sowie der Durchlass 18 derart angeordnet sind, dass sie ein akustisches Labyrinth ausbilden. Um zu verhindern, dass Schall vom Kofferraumbereich 12 geradlinig und somit weitgehend unvermindert in den Fahrzeuginnenraum 55 gelangt, sind die erste Aussparung 40 und der Durchlass 18 derart angeordnet, dass der im Kofferraumbereich 12 befindliche Schall zweimal die Richtung ändern muss, bevor er den Fahrzeuginnenraum 55 erreicht, nämlich einmal im Bereich des Durchlasses 18 und ein weiteres Mal im Inneren des Hohlraums 24. Somit wird sichergestellt, dass nur ein minimaler Anteil des von außen in den Kofferraumbereich 12 eingetragenen Schalls in den Fahrzeuginnenraum 55 gelangt.

Zusätzlich können der Hohlraum 24 und/oder der Kofferraumbereich 12 mit schallabsorbierendem Material 23 ausgekleidet sein.

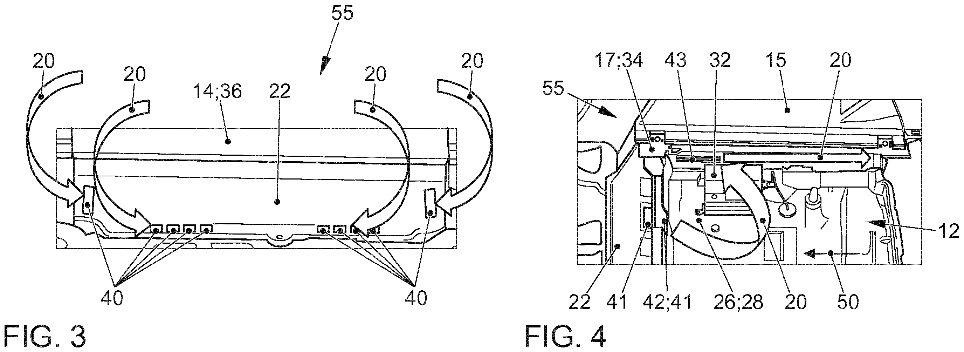

Figur 3 zeigt das Abdeckelement 22 von vorn, also mit Blickrichtung entgegen der Fahrtrichtung des Kraftfahrzeugs. Es ist ersichtlich, dass rechts und links außen jeweils eine erste Aussparung 40 angeordnet ist. Zusätzlich befindet sich eine Reihe erster Aussparungen 40 im Bereich der Unterkante. Schematisch ist dargestellt, wie Luftströme 20 aus dem Fahrzeuginnenraum 55 durch die jeweiligen ersten Aussparungen 40 in den hinter dem Abdeckelement 22 befindlichen, nicht dargestellten Hohlraum geleitet werden.

Wie bereits aus Figur 2 ersichtlich, schließt die Oberkante des Abdeckelements 22 unmittelbar an den Ladeboden 14 bzw. an die daran angeordnete textile Abdeckung 36 an.

Figur 4 zeigt die bereits in Figur 2 dargestellte Ausgestaltung des erfindungsgemäßen Bauteilsystems in einer seitlichen Ansicht von schräg oben nach Art einer Explosionszeichnung. Der Ladeboden ist zur Steigerung der Übersichtlichkeit nicht dargestellt.

Auf der linken Seite, die in Fahrtrichtung 50 gesehen den vorderen Bereich des Bauteilsystems darstellt, ist das Abdeckelement 22 mit der daran angeordneten zweiten Aussparung 41 dargestellt. Eine entsprechende zweite Aussparung 41, auch als Freimachung 42 bezeichnet, ist in der das erste Bauteil in Richtung auf den Kofferraumbereich 12 abdeckenden Verkleidung 26, nämlich dem Bodenbelag 28, angeordnet. Im montierten Zustand überlappen sich die genannten zweiten Aussparungen 41 unter Ausbildung einer Öffnung, durch welche der Luftstrom 20 vom Hohlraum 24 über den Durchlass 18 (beide hier nicht gezeigt) in den Kofferraumbereich 12 strömen kann.

Oberhalb des Kofferraumbereichs 12 mit der darin angeordneten zu kühlenden Einheit 32 ist ein zweites Bauteil 17 dargestellt, welches Teil des Rohbaus 34 ist. In diesem ist eine dritte Aussparung 43 angeordnet, mittels welcher in den Kofferraumbereich 12 eingeleitete Luft aus diesem hinaus und abgeleitet werden kann. Zu diesem Zweck befindet sich hinter dem zweiten Bauteil 17 ein Strömungskanal, mit welchem der mittels des geraden Pfeils dargestellte Luftstrom 20 entgegen der Fahrtrichtung 50 zu einem heckseitig befindlichen Entlüftungselement (hier nicht dargestellt) geleitet werden kann.

Das dargestellte zweite Bauteil 17 begrenzt den Kofferraumbereich 12 auf der rechten Fahrzeugseite. Ein analog ausgestattetes zweites Bauteil 17 ist entsprechend an der linken Fahrzeugseite angeordnet. Die zweiten Bauteile 17 dienen der seitlichen mechanischen Abstützung des Ladebodens. Der oberhalb des Ladebodens befindliche Kofferraum ist seitlich von der dargestellten Seitenwand 15 begrenzt.

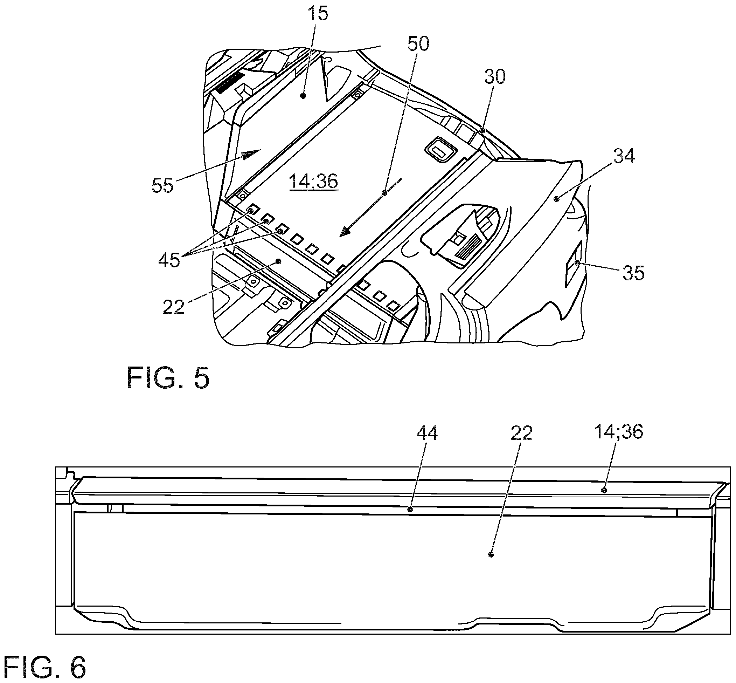

Figur 5 zeigt einen Kraftfahrzeug-Kofferraum von schräg oben analog zu Figur 1. Abweichend von der dort gezeigten Ausgestaltung ist hier entlang der vorderen Kante des Ladebodens 14 eine Reihe von Belüftungsöffnungen 45 angeordnet. Diese können alternativ oder zusätzlich zu den im Abdeckelement 22 anzuordnenden ersten Aussparungen 40 vorgesehen werden, um Luft aus dem Fahrzeuginnenraum 55, nämlich aus dem vom Nutzer zur Ablage von Gegenständen nutzbaren Kofferraum, direkt in den zwischen Abdeckelement 22 und erstem Bauteil befindlichen Hohlraum (hier nicht dargestellt) zu leiten.

Figur 6 zeigt eine weitere alternative Ausgestaltung, bei welcher abweichend zu Figur 3 zwischen dem Abdeckelement 22 und dem Ladeboden 14 bzw. der daran befindlichen textilen Abdeckung 36 ein Spalt 44 angeordnet ist. Dieser dient als Alternative zu den hier nicht vorhandenen ersten Aussparungen 40 (vergleiche Figur 3) und ist dazu eingerichtet, im Fahrzeuginnenraum befindliche Luft in den hinter dem Abdeckelement 22 befindlichen Hohlraum zu leiten. Selbstverständlich könnte ein derartiger Spalt 44 auch zusätzlich zu wenigstens einer ersten Aussparung 40 vorgesehen werden.

**Bezugszeichenliste**

| | |
|---|---|
| Bauteilsystem | 10 |
| Kofferraumbereich | 12 |
| Ladeboden | 14 |
| Seitenwand | 15 |
| Erstes Bauteil | 16 |
| Zweites Bauteil | 17 |
| Durchlass | 18 |
| Luftstrom | 20 |
| Abdeckelement | 22 |
| Schallabsorbierendes Material | 23 |
| Hohlraum | 24 |
| Verkleidung | 26 |
| Bodenbelag | 28 |
| Schlossträger hinten | 30 |
| Zu kühlende Einheit | 32 |
| Rohbau | 34 |
| Entlüftungselement | 35 |
| Textile Abdeckung | 36 |
| Erste Aussparung | 40 |
| Zweite Aussparung | 41 |
| Freimachung | 42 |
| Dritte Aussparung | 43 |
| Spalt | 44 |
| Belüftungsöffnung | 45 |
| Fahrtrichtung | 50 |
| Fahrzeuginnenraum | 55 |

## Patentansprüche

1. Bauteilsystem (10) zur Belüftung eines Kofferraumbereichs (12) eines Kraftfahrzeugs zwecks Kühlung wenigstens einer in dem Kofferraumbereich (12) befindlichen Einheit (32), umfassend einen Ladeboden (14) zur Ablage von Gegenständen, den unter dem Ladeboden (14) angeordneten Kofferraumbereich (12), sowie ein den Kofferraumbereich (12) bereichsweise begrenzendes erstes Bauteil (16), insbesondere ein Rohbauteil, mit wenigstens einem Durchlass (18) zur Durchleitung eines Luftstroms (20) in den Kofferraumbereich (12), **dadurch gekennzeichnet, dass** dieser Durchlass (18) zwischen Ladeboden (14) und erstem Bauteil (16) angeordnet ist.

2. Bauteilsystem (10) zur Belüftung eines Kofferraumbereichs (12) nach Anspruch 1, **dadurch gekennzeichnet, dass** das erste Bauteil (16) zur mechanischen Abstützung des Ladebodens (14) dient.

3. Bauteilsystem (10) zur Belüftung eines Kofferraumbereichs (12) nach einem der vorhergehenden Ansprüche, **dadurch gekennzeichnet, dass** das Bauteilsystem (10) weiterhin ein Abdeckelement (22) zur Abdeckung des ersten Bauteils (16) umfasst, wobei das Abdeckelement (22) derart angeordnet und/oder ausgestaltet ist, dass zwischen dem ersten Bauteil (16) und dem Abdeckelement (22) ein mit dem Kofferraumbereich (12) strömungstechnisch verbundener Hohlraum (24) ausgebildet ist.

4. Bauteilsystem (10) zur Belüftung eines Kofferraumbereichs (12) nach Anspruch 3, **dadurch gekennzeichnet, dass** das Abdeckelement (22) wenigstens eine erste Aussparung (40) zur Durchleitung des Luftstroms (20) in den Hohlraum (24) aufweist und/oder dass zwischen Abdeckelement (22) und Ladeboden (14) ein Spalt (44) zur Durchleitung des Luftstroms (20) in den Hohlraum (24) angeordnet ist.

5. Bauteilsystem (10) zur Belüftung eines Kofferraumbereichs (12) nach einem der Ansprüche 3 und 4, **dadurch gekennzeichnet, dass** die strömungstechnische Verbindung zwischen dem Hohlraum (24) und dem Kofferraumbereich (12) eine von dem Abdeckelement (22) und/oder einer Verkleidung (26) des ersten Bauteils (16) ausgebildete zweite Aussparung (41) umfasst.

6. Bauteilsystem (10) zur Belüftung eines Kofferraumbereichs (12) nach einem der vorhergehenden Ansprüche, **dadurch gekennzeichnet, dass** das Bauteilsystem (10) wenigstens ein den Kofferraumbereich (12) bereichsweise begrenzendes zweites Bauteil (17) aufweist, wobei das zweite Bauteil (17) zumindest eine dritte Aussparung (43), insbesondere eine Öffnung, zur Ableitung des Luftstroms (20) aus dem Kofferraumbereich (12) aufweist.

7. Bauteilsystem (10) zur Belüftung eines Kofferraumbereichs (12) nach einem der vorhergehenden Ansprüche, **dadurch gekennzeichnet, dass** das Bauteilsystem (10) wenigstens ein mit dem Kofferraumbereich (12) strömungstechnisch verbundenes Entlüftungselement (35), insbesondere einen Zwangsentlüfter, zur Realisierung des Luftstroms (20) durch den Kofferraumbereich (12) aufweist.

8. Bauteilsystem (10) zur Belüftung eines Kofferraumbereichs (12) nach einem der Ansprüche 4-7, **dadurch gekennzeichnet, dass** die erste Aussparung (40) des Abdeckelements (22) und der Durchlass (18) derart angeordnet sind, dass sie ein akustisches Labyrinth ausbilden.

9. Kraftfahrzeug, insbesondere Personenkraftwagen, **dadurch gekennzeichnet, dass** das Kraftfahrzeug wenigstens ein Bauteilsystem (10) zur Belüftung eines Kofferraumbereichs (12) gemäß einem der Ansprüche 1-8 aufweist.

10. Kraftfahrzeug nach Anspruch 9, **dadurch gekennzeichnet, dass** das Kraftfahrzeug weiterhin wenigstens eine zu kühlende Einheit (32) aufweist, insbesondere umfassend wenigstens einen Superkondensator, wobei die wenigstens eine Einheit (32) derart im Kofferraumbereich (12) angeordnet ist, dass sie mittels eines in den Kofferraumbereich (12) eingeleiteten Luftstroms (20) kühlbar ist.

## Claims

1. Component system (10) for ventilating a boot space area (12) of a motor vehicle for the purpose of cooling at least one unit (32) located in a boot space area (12), comprising a loading floor (14) for storing items, the boot space region (12) arranged underneath the loading floor (14), and a first component (16), particularly a blank component delimiting regions of the boot space area (12),
with at least one
passage (18) for guiding through a flow of air (20) into the boot space area (12), **characterised in that** this passage (18) is arranged between the loading floor (14) and the first component (16).

2. Component system (10) for ventilating a boot space area (12) according to claim 1, **characterised in that** the first component (16) is used to support the loading floor (14) mechanically.

3. Component system (10) for ventilating a boot space area (12) according to any one of the preceding claims, **characterised in that** the component system (10) furthermore comprises a cover element (22) for covering the first component (16), wherein the cover element (22) is arranged and/or formed is such a way that, between the first component (16) and the cover element (22), a hollow space (24) is formed, flow dynamically connected to the boot space area (12).

4. Component system (10) for ventilating a boot space area (12) according to claim 3, **characterised in that** the cover element (22) exhibits at least one first recess (40) for guiding through the air flow (20) into the hollow space (24) and/or that, between the cover element (22) and loading floor (14), a gap (44) is arranged for guiding through the air flow (20) into the hollow space (24).

5. Component system (10) for ventilating a boot space area (12) according to any one of claims 3 and 4, **characterised in that** the fluid dynamic connection between the hollow space (24) and the boot space area (12) comprises a second recess (41) formed by either the cover element (22) and/or a trim (26) of the first component (16).

6. Component system (10) for ventilating a boot space area (12) according to any one of the preceding claims, **characterised in that** the component system (10) exhibits at least one second component (17) delimiting the boot space area (12) at least in regions, wherein the second component (17) exhibits at least one third recess (43), particularly an opening, to guide away the air flow (20) out of the boot space area (12).

7. Component system (10) for ventilating a boot space area (12) according to any one of the preceding claims, **characterised in that** the component system (10) exhibits at least one ventilation element (35) flow dynamically connected to the boot space area (12), particularly a forced extraction fan, for realisation of the air flow (20) through the boot space area (12).

8. Component system (10) for ventilating a boot space area (12) according to any one of claims 4-7, **characterised in that** the first recess (40) of the cover element (22) and the passage (18) are arranged in such a way that they form an acoustic labyrinth.

9. Motor vehicle, particularly a motor car, **characterised in that** the motor vehicle exhibits at least one component system (10) for ventilating a boot space area (12) according to any one of claims 1-8.

10. Motor vehicle according to claim 9, **characterised in that** the motor vehicle further exhibits at least one unit (32) to be cooled, particularly comprising at least one supercapacitor, wherein the at least one unit (32) is arranged in the boot space area (12) in such a way that it can be cooled by means of the air flow (20) directed into the boot space area (12).

## Revendications

1. Système de composants (10) destiné à l'aération d'une zone de coffre (12) d'un véhicule à moteur à des fins de refroidissement d'au moins une unité (32) se trouvant dans la zone de coffre (12), comprenant un plancher de chargement (14) pour déposer des objets, ladite zone de coffre (12) disposée sous le plancher de chargement (14), ainsi qu'un premier composant (16), en particulier un composant brut, délimitant, par zones, la zone de coffre (12),
comportant au moins un passage (18) pour faire passer un flux d'air (20)
dans la zone de coffre (12), **caractérisé en ce que** ledit passage (18) est disposé entre le plancher de chargement (14) et le premier composant (16).

2. Système de composants (10) destiné à l'aération d'une zone de coffre (12) selon la revendication 1, **caractérisé en ce que** ledit premier composant (16) sert au support mécanique du plancher de chargement (14) .

3. Système de composants (10) destiné à l'aération d'une zone de coffre (12) selon l'une quelconque des revendications précédentes, **caractérisé en ce que** le système de composants (10) comprend en outre un élément de recouvrement (22) pour couvrir le premier composant (16), l'élément de recouvrement (22) étant disposé et/ou conçu de telle sorte qu'une cavité (24) en communication fluidique avec la zone de coffre (12) est formée entre le premier composant (16) et l'élément de recouvrement (22).

4. Système de composants (10) destiné à l'aération d'une zone de coffre (12) selon la revendication 3, **caractérisé en ce que** l'élément de recouvrement (22) comporte au moins un premier évidement (40) pour faire passer le flux d'air (20) dans la cavité (24) et/ou qu'une fente (44) est disposée entre l'élément de recouvrement (22) et le plancher de chargement (14) pour faire passer le flux d'air (20) dans la cavité (24).

5. Système de composants (10) destiné à l'aération d'une zone de coffre (12) selon l'une quelconque des revendications 3 et 4, **caractérisé en ce que** la communication fluidique entre la cavité (24) et la zone de coffre (12) comprend un deuxième évidement (41) formé de l'élément de recouvrement (22) et/ou d'un revêtement (26) du premier composant (16).

6. Système de composants (10) destiné à l'aération d'une zone de coffre (12) selon l'une quelconque des revendications précédentes, **caractérisé en ce que** ledit système de composants (10) comporte au moins un deuxième composant (17) délimitant par zones la zone de coffre (12), le deuxième composant (17) comprenant au moins un troisième évidement (43), en particulier une ouverture, pour évacuer le flux d'air (20) de la zone de coffre (12).

7. Système de composants (10) destiné à l'aération d'une zone de coffre (12) selon l'une quelconque des revendications précédentes, **caractérisé en ce que** ledit système de composants (10) comprend au moins un élément de mise à l'air libre (35) en communication fluidique avec la zone de coffre (12), en particulier un dispositif de mise à l'air libre forcée, pour réaliser le flux d'air (20) à travers la zone de coffre (12) .

8. Système de composants (10) destiné à l'aération d'une zone de coffre (12) selon l'une des revendications 4 à 7, **caractérisé en ce que** le premier évidement (40) de l'élément de recouvrement (22) et le passage (18) sont disposés de telle sorte qu'ils forment un labyrinthe acoustique.

9. Véhicule à moteur, en particulier une voiture particulière, **caractérisé en ce que** ledit véhicule à moteur comprend au moins un système de composants (10) destiné à l'aération d'une zone de coffre (12) selon l'une quelconque des revendications 1 à 8.

10. Véhicule à moteur selon la revendication 9, **caractérisé en ce que** le véhicule à moteur comprend en outre au moins une unité (32) à refroidir, comportant en particulier au moins un supercondensateur, l'au moins une unité (32) étant disposée dans la zone de coffre (12) de telle sorte qu'elle peut être refroidie au moyen d'un flux d'air (20) introduit dans la zone de coffre (12).
